# EUROPEAN PATENT APPLICATION

(11) **EP 2 869 388 A1**
(43) Date of publication of application: **06.05.2015**
(21) Application number: 13808936.2
(22) Date of filing: 16.04.2013
(51) Int. Cl.: H01M 10/052, H01M 4/58, H01M 10/0568, H01M 10/0569

(54) **LITHIUM-ION SECONDARY CELL**

(30) Priority: 28.06.2012 JP 2012144976
(71) Applicant: Fuji Jukogyo Kabushiki Kaisha, Shibuya-ku Tokyo Tokyo 1508554 (JP); Nippon Chemical Industrial Co., Ltd., Koto-ku, Tokyo 136-8515 (JP)
(72) Inventor: BABA Ken, Tokyo 160-8316 (JP); KIYA Yasuyuki, Tokyo 160-8316 (JP); KUDO Satoshi, Tokyo 160-8316 (JP); SAKURABA Takahito, Tokyo 160-8316 (JP)
(74) Representative: Sajda, Wolf E.
(86) International application number: PCT/JP2013/061238
(87) International publication number: WO 2014/002584

(57) **Abstract**

Provided is a lithium ion secondary battery having a large energy density and an improved capacity retention rate after repeated use even under high voltage application (cycle characteristics), and excellent in safety. A lithium ion secondary battery containing a negative electrode for reversibly intercalating and deintercalating lithium ions, a positive electrode containing lithium vanadium phosphate, and a non-aqueous electrolytic solution containing lithium fluoroethyl phosphate as an electrolyte can be obtained.

## Description

### Technical Field

The present invention relates to a lithium ion secondary battery excellent in long-term reliability, in particular, a lithium ion secondary battery having an improved capacity retention rate after multi-cycle use.

### Background Art

In recent years, lithium ion electricity storage devices such as lithium ion secondary batteries are widely used in various fields such as electric vehicles (e.g. EV and HEV) and portable information and communication devices.

In many of the lithium ion secondary batteries, a lithium composite oxide such as LiCoO₂ is used as a positive-electrode active material so as to achieve an electricity storage device having high capacity and long-lifetime.

The positive-electrode active material, however, would actively react with the electrolytic solution under high temperature and high voltage conditions at occurrence of abnormality, and would generate heat with oxygen release. In the worst case, there is a possibility of ignition.

With enhanced performance and increased capacity of automobiles and electronic devices, electricity storage devices such as lithium ion secondary batteries are also desired to have further improved properties such as improved energy density (large capacity), improved power density (large output), improved cycle characteristics (improved cycle life), and enhanced safety.

In recent years, lithium vanadium phosphate such as Li₃V₂(PO₄)₃ is gathering attention as an electrode material having thermal stability with less risk of fire. Li₃V₂(PO₄)₃ has an operating voltage of 3.8 V relative to Li/Li⁺ and a high theoretical capacity of 195 mAh/g, from which a lithium ion secondary battery having a large capacity with high safety can be prepared.

It is reported, however, that the repeated use of lithium vanadium phosphate as positive electrode material may cause capacity degradation. Namely, it is believed that the repeated use causes elution of vanadium, resulting in degradation of charge-discharge cycle characteristics.

For example, Li₃V₂(PO₄)₃ is a positive-electrode active material having a high capacity of 120 to 130 mAh/g for charging at 4.2 V, and 150 to 180 mAh/g at 4.6 V. The electrode, when repeatedly operated under a high voltage of 4.3 V or higher, would lead to capacity degradation.

With the charge-discharge cycle characteristics, taken into account, for example, Patent Literature 1 discloses a non-aqueous electrolyte battery using a positive electrode material having a vanadium compound of more than trivalent on the surface of Li₃V₂(PO₄)₃ particles.

As in Patent Literature 1, the non-aqueous electrolyte battery is designed to prevent vanadium from flowing out of Li₃V₂(PO₄)₃ particles, and to improve the charge-discharge cycle characteristics at high temperature.

Not only electrode materials but also the characteristics of electrolyte salts have been studied in various ways for stable use of lithium ion secondary batteries at high temperature and improvement of the durability thereof (Patent Literatures 2 and 3).

For example, Patent Literature 2 describes that lithium C₃-C₈ fluoroalkyl phosphates can be satisfactorily used as an electrolyte salt for secondary batteries, due to the resistance to hydrolysis over a long period of time.

In Patent Literature 2, decomposition of electrolyte itself is avoided, and the electrolytic solution is stabilized. As a result, lithium ion secondary batteries having improved stability and durability (cycle characteristics) are attained.

### Prior Art Literature

### Patent Literature

| | |
|---|---|
| Patent Literature 1: | JP-A-2009-231 206 |
| Patent Literature 2: | JP-A-2001-233 887 |
| Patent Literature 3: | JP-A-2001-354 681. |

### Summary of the Invention

### Problems to be solved by the Invention

However, there is still room for the conventional lithium ion secondary batteries to have improved performance/properties or the balance thereof, in order to provide lithium ion secondary batteries, which are stable, and excellent in view of cycle characteristics, even after high-capacity charge-discharge under application of high voltage, with safety requirement being satisfied.

Therefore, an object of the present invention is to provide a lithium ion secondary battery having a large energy density and an improved capacity retention rate after repeated use under high voltage application (cycle characteristics), which is also excellent in safety.

### Means for Solving the Problems

To achieve the object, the present inventors have developed a lithium ion secondary battery including a negative electrode for reversibly intercalating and deintercalating lithium ions, a positive electrode containing lithium vanadium phosphate, and a non-aqueous electrolytic solution containing lithium fluoroethyl phosphate, preferably Li(C₂F₅)₃PF₃, as an electrolyte.

According to this structure, a coating film (also referred to as a positive electrode coating film or a coating film on the positive electrode) containing lithium fluoroethyl phosphate is formed on the surface of positive electrode during charging or discharging.

In other words, the surface of a positive-electrode mixture layer in contact with electrolyte is protected with the coating film, so that vanadium is prevented from eluting from a positive-electrode active material. Consequently, vanadium hardly precipitates on a negative electrode.

As a result, lithium ion secondary batteries having an improved capacity retention rate even after a cycle test has been obtained in the present invention. In other words, a lithium secondary battery excellent in long-term reliability can be provided.

Preferably, the lithium ion secondary battery of the present invention has an operating voltage of 4.3 V or more, in particular, 4.6 V or more. The lithium ion secondary battery of the present invention is thereby capable of fully utilizing the high energy density of lithium vanadium phosphate as positive electrode material, so as to achieve a high power density.

Further, examples of the solvent for use in the non-aqueous electrolytic solution of the present invention are dimethyl carbonate (DMC), diethyl carbonate (DEC), ethyl methyl carbonate (EMC), ethylene carbonate (EC), fluoroethylene carbonate (FEC), propylene carbonate (PC), butylene carbonate (BC), vinylene carbonate (VC), acetonitrile (AN), 1,2-dimethoxyethane (DME), tetrahydrofuran (THF), 1,3-dioxolane (DOXL), dimethyl sulfoxide (DMSO), sulfolane (SL), and propionitrile (PN), or a mixtures of two or more thereof.

By use of the solvent described above, lithium fluoroethyl phosphate, i.e. an electrolyte, is uniformly dispersed in the electrolytic solution.

It is preferable that fluoroethylene carbonate in an amount of 0.1 mass% to 30 mass%, is included in the total amount of the solvent for the non-aqueous electrolytic solution, because the positive electrode coating film is particularly stabilized.

Preferably, lithium vanadium phosphate (LVP) is a material represented by:

LiₓV_{2-y}M_{y}(PO₄)_{z};

wherein M is one or more of metallic elements having an atomic number of 11 or more, and
1≤x≤3
0 ≤ y <2, and
2 ≤ z ≤ 3, and
particularly preferably, Li₃V₂(PO₄)₃.

The content of lithium fluoroethyl phosphate is preferably in the range of 0.1 to 35 mass%, based on 100 mass%, the total mass of electrolytic solution.

When the content of lithium fluoroethyl phosphate is less than 0.1 mass%, based on 100 mass%, the total mass of electrolytic solution, the film thickness of positive electrode comes to be insufficient. While when the content of lithium fluoroethyl phosphate is more than 35 mass%, based on 100 mass%, the total mass of electrolytic solution, the flow of lithium ions from LVP can be hindered for some cases.

Furthermore, when the content of lithium fluoroethyl phosphate is more than 35 mass%, increase in the internal resistance of a lithium ion secondary battery is observed.

### Effects of the Invention

The lithium ion secondary battery of the present invention comprises a positive electrode comprising lithium vanadium phosphate (LVP) and a non-aqueous electrolytic solution comprising lithium fluoroethyl phosphate as an electrolyte. Based on the structure, it is capable of fully utilizing the excellent energy density inherent to lithium vanadium phosphate.

In other words, due to use of the lithium fluoroethyl phosphate electrolyte, a coating film is formed on the positive electrode, and the precipitation of vanadium from a positive electrode material on a negative electrode is prevented. Accordingly, the capacity degradation of the electrode material does not happen.

Consequently, the lithium ion secondary battery of the present invention has an improved capacity retention rate after repeated use, having excellent in long-term reliability. Furthermore, a large-capacity charge discharge can be achieved in the battery of the present invention, since a high voltage is applicable to the battery.

### Brief Description of the Drawings

- FIG. 1: is a schematic cross-sectional view showing the inside of a lithium ion secondary battery as an embodiment of the present invention.
- FIG. 2: is a graph showing precipitation amounts of vanadium at the negative electrodes for the lithium ion secondary batteries of the present invention and for comparison, in a charge-discharge cycle test.
- FIG. 3: is a graph showing the transition of discharge capacity retention rates in a charge-discharge cycle test for the lithium ion secondary batteries of the present invention and for comparison.
- FIG. 4(a), FIG. 4(b) and FIG. 4(c): are graphs showing results of a qualitative analysis with respect to a positive electrode coating on the surface and in the depth direction after the lithium ion secondary batteries of Example 1, Example 2, and Comparative Example 2, respectively, were subjected to charge-discharge cycle test.

### Modes for carrying out the Invention

Hereinafter, the mode for carrying out the present invention will be described in detail.

The lithium ion secondary battery of the present invention comprises a negative electrode for reversibly intercalating and deintercalating lithium ions, a positive electrode comprising lithium vanadium phosphate, and a non-aqueous electrolytic solution containing lithium fluoroethyl phosphate as an electrolyte.

In the present invention, a lithium ion secondary battery is provided, by using a positive electrode material having a large theoretical capacity, which achieves high-capacity charge and discharge and has long-lifetime without causing capacity degradation even after repeated use, i.e., improved cycle life characteristics, even by the application of a voltage higher than 4.3 V, in particular, a high voltage of 4.6 V or more to the secondary battery.

In the present invention, lithium fluoroethyl phosphate (FEP) is a compound represented by:

LiRₓPF₆₋ₓ;

wherein R is C₂F₅; and
1 ≤ x ≤ 5.
In particular, Li(C₂F₅)₃PF₃ is preferable.

By using an electrolytic solution including lithium fluoroethyl phosphate as an electrolyte, a coating film composed of elements derived from lithium fluoroethyl phosphate is formed on the positive electrode, more specifically, almost all over the surface of the positive electrode, which is brought into contact with the electrolytic solution, of the positive-electrode mixture layer.

Since the coating film is adhered to the positive electrode in a stable state, so that vanadium as positive-electrode active material is prevented from flowing out from the positive-electrode mixture layer.

When using lithium vanadium phosphate as a positive-electrode active material in a conventional lithium ion secondary battery, a voltage of 4.2 V or less is generally applied, because cycle-characteristics degradation is concerned about.

Although the theoretical capacity of lithium vanadium phosphate itself is large, the discharge energy value is limited due to the restricted voltage. Further, when other active material is used, the operating voltage is generally selected to be 4.2 V or less.

When a high voltage is applied to a lithium ion secondary battery wherein lithium vanadium phosphate is used as a positive-electrode active material, vanadium in the active material is eluted into electrolytic solution and precipitates on the negative electrode material.

When the lithium ion secondary battery is repeatedly used a number of times, it has been therefore assumed that the capacity retention rate gradually decreases to inevitably shorten the battery lifetime.

In contrast, the present invention focuses on the use of electrolytic solution containing lithium fluoroethyl phosphate (FEP) as an electrolyte. In the present invention, the use of FEP as an electrolyte prevents the phenomenon of vanadium eluting into the electrolytic solution and precipitating on a negative electrode, which is observed in a conventional lithium ion battery using, for example, LiPF₆ as an electrolyte, by the mechanism described above. A lithium ion secondary battery which causes no elution of vanadium at an operating voltage of 4.3 V or higher can thus be obtained.

The lithium ion secondary battery of the present invention allows the large theoretical capacity inherent to lithium vanadium phosphate to be utilized to the maximum extent. Accordingly, the discharge energy of the lithium ion battery of the invention has been maximized.

By preventing vanadium from eluting from the positive-electrode active material, a lithium ion secondary battery having a long lifetime is obtained with the capacity degradation being minimized, even under repeated application of a voltage of 4.3 V or more, in particular, a high voltage of 4.6 V or more.

### Positive-electrode active material

According to the present invention, lithium vanadium phosphate (LVP) is used as positive-electrode active material. The lithium vanadium phosphate (LVP) in the present invention represents a NASICON type lithium vanadium phosphate. For example, the lithium vanadium phosphate is a material represented by:

LiₓV_{2-y}M_{y}(PO₄)_{z}

wherein M is a metal element which has an atomic number 11 or more, for example, one or more atom selected from the group consisting of Fe, Co, Mn, Cu, Zn, Al, Sn, B, Ga, Cr, V, Ti, Mg, Ca, Sr and Zr; and satisfies the following relations:
1 ≤ x ≤ 3,
0 ≤ y ≤ 2, and
2 ≤ z ≤ 3.

In the present invention, Li₃V₂(PO₄)₃ is most preferably used as LVP. All of the other LVPs represented by the formula, however, have the problem of vanadium elution, which is common with Li₃V₂(PO₄)₃. The problem for all LVPs can be solved by the present invention.

The LVP is a material particularly excellent in charge-discharge capacity and charge-discharge cycle characteristics, directly contributing to the high-capacity charge-discharge and the excellent cycle characteristics of the lithium ion secondary battery of the present invention. The lithium vanadium phosphate can be used in a granulated form. The grain diameter is not particularly limited.

### Manufacturing method of lithium vanadium phosphate (LVP)

The LVP may be manufactured by any method without specific limitations. For example, LVP is prepared by mixing and reacting a lithium source such as LiOH and LiOH·H₂O, a vanadium source such as V₂O₅ and V₂O₃, and a phosphoric acid source (such as NH₄H₂PO₄ and (NH₄)₂HPO₄), with each other, and subjecting the resultant substance to calcination. The obtained LVP may be in a state of particles formed by crushing a calcined substance.

It is preferable that the LVP particles are spherical or substantially spherical. The average diameter of primary particles of the LVP is 2.6 µm or less, and preferably in a range of 0.05 µm to 1.2 µm.

If the average diameter of the primary particles is less than 0.05 µm, the stability of LVP may be lowered. This is because the particle surface area of the particles which is to be contact with an electrolytic solution is excessively increased.

If the average diameter of the primary particles exceeds 2.6 µm, the reactivity may be insufficient. By setting the average diameter of primary particles of the LVP in the above range, the surface area of each of active material particles is increased so that the contact area with the electrolytic solution is also increased to make an electrode reaction happen more easily. Thereby, the rate characteristics of the lithium ion secondary battery are improved.

The average diameter of primary particles is a value obtained by observing the particles using a scanning electron microscope, measuring the diameter of 200 primary particles arbitrarily selected, and calculating the average of measured diameters.

By setting the average diameter of primary particles of the LVP in the above range, the LVP particles are uniformly heated, wherein the crystallization degree is improved and the crystalline structure having a small quantity of hetero phase is obtained.

The crystallization degree may vary depending on raw materials of the LVP and/or calcination conditions. When the crystallization degree is 98 % or more, the capacity characteristics and the cycle characteristics of the lithium ion secondary battery are improved.

The LVP grain size affects the density of LVP and/or the process performance such as coating/paint preparation. Thus, it is preferable that D50 in the grain size distribution of secondary particles of LVP is 0.5 µm to 25 µm. When D50 is less than 0.5 µm, the stability of LVP may be decreased due to excessively increased contact surface with the electrolytic solution.

When D50 exceeds 25 µm, the power output may be decreased due to decrease in reaction efficiency. When D50 is within the above range, it is possible to obtain an electricity storage device with improved stability and large power output.

It is more preferable that D50 in the grain size distribution of secondary particles of LVP is 1 µm to 10 µm, and it is particularly preferable that D50 is 3 µm to 5 µm. D50 in the grain size distribution of secondary particles is a value that is measured by a grain size distribution measuring apparatus using a laser diffraction (light scattering) method.

LVP itself has a small electron conductivity. Therefore, it is preferable that surfaces of the LVP particles be coated with conductive carbon so as to improve the electron conductivity of LVP.

A coating of the conductive carbon onto LVP may be performed by various methods. For example, a further process is applicable, such as a process in which the conductive carbon (e.g. carbon black such as ketjen black, acetylene black and oil furnace black, and carbon nanotube) is applied after synthesizing LVP, or a process in which the conductive carbon itself or a reaction precursor of the conductive carbon is mixed during synthesizing LVP.

The reaction precursor of the conductive carbon used for forming a positive-electrode coating layer may be, for example, a natural polymer such as saccharide such as glucose, fructose, lactose, maltose or sucrose.

The LVP particles are coated with the conductive carbon in the range of 0.5 mass% to 2.4 mass%, preferably 0.6 mass% to 1.8 mass% with respect to the total mass of LVP, so as to have a desired electric conductivity as positive-electrode active material.

When the amount of the coating is less than 0.5 mass%, the electric conductivity is insufficient. When the amount of the coating exceeds 2.4 mass%, a side reaction by the conductive carbon is activated to reduce reliability.

When the average diameter of primary particles of LVP is 2.6 µm or less with the amount of conductive carbon to be used together being set as described above, the electric conductivity is imparted to the LVP which is an insulating material as it is.

Consequently, the rate characteristics relating to the charge-discharge efficiency are improved. Further, reduction in the capacity retention ratio can be suppressed even after repeated use of the lithium ion secondary battery.

When LVP particles are coated with conductive carbon, the average diameter of primary particles of LVP may be considered as the average diameter of primary particles of an LVP-conductive carbon complex.

As an industrially effective manufacturing method of the LVP-conductive carbon complex, a manufacturing method can be used, which includes a step of obtaining a reaction precursor by spray-drying a reaction liquid (a) prepared by reacting a lithium source, a vanadium compound, a phosphorus source, and a conductive carbon material source that generates a carbon by a thermal decomposition thereof in water solvent, and a step of calcining the reaction precursor under an inert gas atmosphere or a reductive atmosphere.

By using the LVP-carbon complex as the positive-electrode active material, an electricity storage device having a large discharge capacity and excellent cycle characteristics is obtained.

As a method for preparing the above reaction 1 (a), for example, one of the following three methods (1) to (3) may be adopted:
(1) A method in which a vanadium compound, a phosphorus source, and a conductive carbon material source that generates carbon by thermal decomposition thereof are subjected to heat treatment, preferably at 60 °C to 100 °C in water solvent for the reaction. Thereafter, the liquid after the heat treatment is cooled down to room temperature, and a lithium source is added to the liquid for further reaction, to obtain the reaction liquid (a).
(2) A method in which a vanadium compound, a phosphorus source, and a conductive carbon material source that generates carbon by thermal decomposition thereof are subjected to heat treatment preferably at 60 °C to 100 °C in water solvent for a reaction. Then, a lithium source is added to the liquid after heat treatment, for a further reaction in a heated condition preferably at 60 °C to 100 °C, to obtain the reaction liquid (a).
(3) A method in which a lithium source, a vanadium compound, a phosphorus source, and a conductive carbon material source that generates carbon by thermal decomposition thereof are added into water solvent, for a reaction in a heated condition preferably at 60 °C to 100 °C, to obtain the reaction liquid (a).

The reaction liquid (a) obtained by the method (1) is in the form of a solution. On the other hand, the reaction liquid (a) obtained by the method (2) or (3) is a reaction liquid (a) including a precipitation product. If needed, the reaction liquid (a) including a precipitation product may be subjected to a wet-crushing process.

In the present invention, the method of obtaining the reaction liquid (a) by the method (3) is particularly preferable for manufacturing the LVP-conductive carbon complex, from such a view-point that the control of the diameter of primary particles is easy.

Specific examples of the manufacturing method using the reaction liquid obtained by the method (3) include:
a first step of mixing a lithium source, a pentavalent or tetravalent vanadium compound, a phosphorus source, and a conductive carbon material source that generates carbon by thermal decomposition thereof in water solvent to prepare an raw material mixture liquid;
a second step of heating the raw material mixture liquid preferably at 60 °C to 100 °C and performing a precipitation-forming reaction to obtain a reaction liquid (a) including a precipitation product;
a third step of subjecting wet-crushing the reaction liquid including the precipitation product by a media mill to obtain a slurry including a crushed product;
a fourth step of spray-drying the slurry including the crushed object to obtain a reaction precursor; and
a fifth step of calcining the reaction precursor under an inert gas atmosphere or a reductive atmosphere at a temperature from 600 °C to 1300 °C.

By using the LVP-carbon complex as positive-electrode active material, an electricity storage device having a large discharge capacity and excellent cycle characteristics can be obtained.

In the manufacturing method, the lithium source may be lithium carbonate, lithium hydroxide, lithium oxide, lithium nitrate or lithium salts of organic acid such as lithium oxalate. These lithium source may be hydrate or anhydride. Among the above listed lithium sources, lithium hydroxide has a high solubility to water and is hence preferable from the industrial point of view.

Examples of the vanadium compound are vanadium pentoxide, ammonium vanadate, and vanadium oxyoxalate. Among them, vanadium pentoxide is preferably used because of the availability at low cost and a reaction precursor having improved reactivity.

Examples of the phosphorus source include phosphoric acid, polyphosphoric acid, anhydrous phosphoric acid, ammonium dihydrogen phosphate, diammonium hydrogen phosphate, ammonium phosphate. Among them, phosphoric acid is preferably used because of the availability at low cost and a reaction precursor having improved reactivity.

The conductive carbon material source may be, for example:
coal tar pitch from soft pitch to hard pitch;
coal-derived heavy oil such as dry-distilled liquefaction oil;
petroleum-based heavy oils including directly distilled heavy oils such as atmospheric residue and vacuum residue, crude oil, and decomposition heavy oil such as ethylene tar by-produced during a thermal decomposition process of naphtha and so on;
aromatic hydrocarbons such as acenaphthylene, decacyclene, anthracene and phenanthrene;
polyphenylenes such as phenazine, biphenyl and terphenyl; polyvinyl chloride; water-soluble polymers such as polyvinyl alcohol, polyvinyl butyral and polyethylene glycol and insolubilized products thereof;
nitrogen-containing polyacrylonitriles;
organic polymers such as polypyrrole;
organic polymers such as sulfur-containing polythiophene and polystyrene;
natural polymers such as saccharides, e.g. glucose, fructose, lactose, maltose and sucrose; thermoplastic resins such as polyphenylene sulfide and polyphenylene oxide; and
thermosetting resins such as phenol-formaldehyde resin and imide resin.

Among them, saccharides are preferable because of industrially availability at low cost In addition, an electricity storage device using the LVP-carbon complex obtained from saccharides as positive-electrode active material has a particularly remarkable discharging capacity and cycle characteristics. Accordingly, saccharides are preferably used.

In order to obtain the LVP-conductive carbon complex by using the reaction solution (a) of the above (1), the previously-discussed fourth and fifth steps may be performed after obtaining the reaction liquid (a) of the above (1).

Moreover, in order to obtain the LVP-conductive carbon complex by using the reaction liquid (a) of the above (2), the previously-discussed third, fourth and fifth steps may be sequentially performed after the reaction liquid (a) of the above (2) being obtained.

### Non-aqueous electrolytic solution

The electrolytic solution for use in the present invention is a non-aqueous electrolytic solution. The non-aqueous electrolytic solution is advantageous because no electrolysis is caused even at high voltage, and lithium ions can stay in the solution in a stable state.

In the present invention, it is required at least a part of the electrolyte of the non-aqueous electrolytic solution includes lithium fluoroethyl phosphate (FEP). Lithium fluoroethyl phosphate is a compound represented preferably by:

LiRₓPF₆₋ₓ;

wherein R is C₂F₅; and
1 ≤ x ≤ 5.

Examples of the lithium fluoroethyl phosphate include Li(C₂F₅)₁PF₅ and Li(C₂F₅)₂PF₄, and in particular Li(C₂F₅)₃PF₃ having high compound stability is preferably used.

By using lithium fluoroethyl phosphate as an electrolyte, the positive-electrode mixture layer will have a coating film of lithium fluoroethyl phosphate approximately all over the surface, which is brought into contact with the electrolyte.

According to analysis results, it was found that the positive electrode coating film contains Li, C, O, F, and P, i.e. elements constituting lithium fluoroethyl phosphate, and that a coating film is not easily formed when other electrolytes is used. Therefore, it is presumed that the main component of the coating film is derived from lithium fluoroethyl phosphate.

In the present invention, other electrolyte species can be used in combination with lithium fluoroethyl phosphate. Examples of the electrolyte for use in combination include LiClO₄, LiAsF₆, LiBF₄, LiCF₃BF₃, LiPF₆, LiB(C₆H₅)₄, CH₃SO₃O, CF₃SO₃Li, (C₂F₅SO₂)₂NLi, and (CF₃SO₂)₂NLi, and the mixture thereof.

In combination with FEP, one or a plurality of other electrolytes species may be used. In the present invention, LiPF₆ or LiBF₄ is preferably used, in particular.

It is required, however, that the proportion of electrolytes other than lithium fluoroethyl phosphate be 15 mass% or less, based on the total mass (100 mass%) of electrolytes. The amount of FEP used, i.e. the essential electrolyte in the present invention, is thereby secured, so that a stable coating including FEP can be formed.

In the case of using lithium fluoroethyl phosphate as single electrolyte, the use proportion is preferably 0.1 mass% or more and 35 mass% or less, particularly preferably 0.5 mass% or more and 30 mass% or less, based on 100 mass% as the total mass of electrolytic solution.

With a lithium fluoroethyl phosphate content of less than 0.1 mass%, based on 100 mass% as the total mass of electrolytic solution, the coating film precipitated on a positive electrode material has insufficient film thickness.

By contrast, with a lithium fluoroethyl phosphate content of more than 35 mass%, based on 100 mass% as the total mass of electrolytic solution, the flow of lithium ions from LVP may be inhibited for some cases.

Further, the lithium ion secondary battery is observed to have increased internal resistance, when the lithium fluoroethyl phosphate content (total content of electrolytes if other electrolyte(s) is/are included) exceeds 40 mass%,

By providing a positive electrode coating film, the inflow and outflow of lithium ions at a positive electrode are appropriately performed, and the vanadium ion is appropriately prevented from eluting.

Examples of the solvent for use in the present invention include, but not particularly limited to, a (straight) chain carbonate such as dimethyl carbonate (DMC), diethyl carbonate (DEC), ethyl methyl carbonate (MEC); a cyclic carbonate such as ethylene carbonate (EC), fluoroethylene carbonate (FEC), propylene carbonate (PC), butylene carbonate (BC), vinylene carbonate (VC); a relatively small molecular weight solvent such as acetonitrile (AN), 1,2-dimethoxyethane (DME), tetrahydrofuran (THF), 1,3-dioxolane (DOXL), dimethyl sulfoxide (DMSO), sulfolane (SL), propionitrile (PN); and a mixture thereof.

Among these solvents, in view of the dispersibility of electrolytes and the coating film formation property with respect to a positive electrode affected by the electrolytes, it is particularly preferable to use dimethyl carbonate (DMC), diethyl carbonate (DEC), ethyl methyl carbonate (EMC), ethylene carbonate (EC), fluoroethylene carbonate (FEC), and vinylene carbonate (VC) in an arbitrary combination of these.

Further, in the present invention, fluoroethylene carbonate (FEC) is preferably used as at least a part of the solvent for electrolytes solution. Fluoroethylene carbonate (FEC) is effectively used in an amount of, for example, 0.1 mass% to 30 mass%, based on the total amount of electrolyte solution, for further stabilizing the positive electrode coating film, preventing vanadium from eluting from the positive electrode, and improving cycle characteristics.

The non-aqueous electrolytic solution may be in a liquid form, or may be mixed with a plasticizer or a polymer to make a solid electrolyte or a polymer gel electrolyte.

In the lithium ion secondary battery of the present invention, which comprises a non-aqueous electrolytic solution comprising lithium fluoroethyl phosphate as an electrolyte, a uniform and stable coating film is formed on the surface of the positive electrode when a high voltage of 4.3 V or more is applied thereto. Accordingly, vanadium is prevented from eluting from the positive-electrode active material.

With the elution of vanadium from LVP to the electrolytic solution being prevented, the large energy density, which LVP inherently possesses, can be maintained.

Due to the formation of the positive electrode coating film, the capacity retention rate of a lithium ion secondary battery can be satisfactorily maintained, even after repeated use. Further, with the use of LVP, malfunction possibility such as ignition is decreased.

Furthermore, even after repeated application of high voltage, efficient charging and discharging can be performed. As a result, according to the present invention, a lithium ion secondary battery excellent in long-term reliability is obtained.

With reference to drawings, an embodiment of the lithium ion electricity storage device of the present invention is described in detail in the followings.

### Electricity storage device

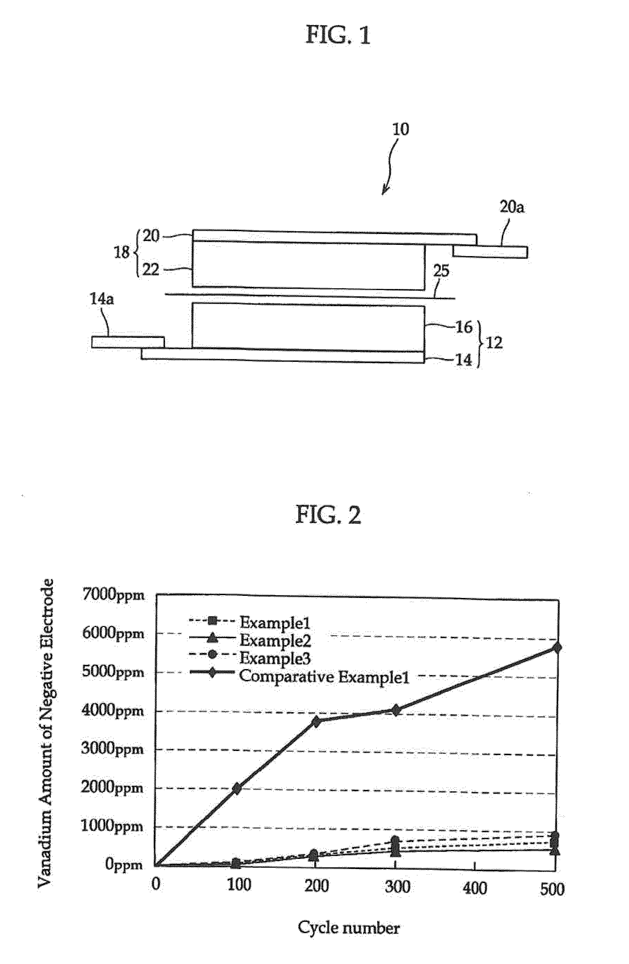

FIG. 1 is a schematic cross-sectional view of a lithium ion secondary battery 10 as an embodiment of the present invention.. As shown in FIG. 1 of the drawings, the lithium ion secondary battery 10 includes a positive electrode 18 and a negative electrode 12 which are disposed opposite to each other via a separator 25.

The positive electrode 18 is composed of a positive-electrode collector 20 and a positive-electrode mixture layer 22 containing a positive-electrode active material of the present invention, disposed on the positive-electrode collector 20.

The negative electrode 12 is composed of a negative-electrode collector 14 and a negative-electrode mixture layer 16 containing a negative-electrode active material, disposed on the negative-electrode collector 14. The negative-electrode mixture layer 16 is disposed opposite to the positive-electrode mixture layer 22 via the separator 25.

The positive electrode 18, the negative electrode 12, and the separator 25 are sealed in an exterior container (not shown) filled with a non-aqueous electrolytic solution. Examples of the external material include a battery can and a laminate film.

Leads 20a and 14a for connecting to exterior terminals are connected to the positive-electrode collector 20 and the negative-electrode collector 14, respectively, if necessary.

The lithium ion secondary battery of the present invention maintains the maximum charge-discharge capacity and the charge-discharge cycle characteristics due to the positive-electrode active material. Hence, the lithium ion secondary battery has a long lifetime.

The positive electrode 18, the negative electrode 12, and the separator 25 of the lithium ion electricity storage device of the present invention are further described in the following.

### Positive electrode

The positive electrode 18 of the present invention is prepared by use of LVP as described above, as well as the other known materials. More specifically, the positive electrode is prepared, for example, as follows.

A positive-electrode mixture layer 22 is formed through a process including: formulating a positive-electrode slurry by dispersing a mixture containing a positive-electrode active material, a binder, and a conductive auxiliary agent in a solvent; and applying the positive-electrode slurry to the positive-electrode collector 20 and drying the same. Pressing may be performed after drying.

As a result, the positive-electrode mixture layer 22 is pressed uniformly and firmly against the collector. The thickness of the positive-electrode mixture layer 22 is 10 µm to 200 µm, and preferably 20 µm to 100 µm.

The positive-electrode active material of the present invention is required to include LVP in an amount of 80 mass% or more, based on the total mass. It is possible to add other positive-electrode active material such as lithium-cobalt composite oxide and lithium-nickel composite oxide to the positive-electrode active material. The positive-electrode active material, however, is preferably prepared exclusively from LVP.

Examples of the binder used for forming the positive-electrode mixture layer are fluorine-based resins such as polyvinylidene fluoride, acryl-based binders, rubber-based binders such as SBR, thermoplastic resins such as polypropylene and polyethylene, and carboxymethyl cellulose.

The binder is preferably a fluorine-based resin or a thermoplastic resin, particularly preferably a fluorine-based resin, which is chemically and electrochemically stable in the non-aqueous electrolytic solution used in the electricity storage device of the present invention.

Examples of the fluorine-based resin include polyvinylidene fluoride, polytetrafluoroethylene, a vinylidene fluoride-trifluoroethylene copolymer, an ethylene-tetrafluoroethylene copolymer, and a propylene-tetrafluoroethylene copolymer. The amount of the binder is preferably 0.5 to 20 mass%, based on the positive-electrode active material.

The conductive auxiliary agent used for forming the positive-electrode mixture layer 22 includes, for example, a conductive carbon such as ketjen black, metals such as copper, iron, silver, nickel, palladium, gold, platinum, indium, and tungsten, and conductive metal oxides such as indium oxide and tin oxide. The amount of the conductive auxiliary agent is preferably 1 to 30 mass% with respect to the positive-electrode active material.

The solvent used for forming the positive-electrode mixture layer 22 may be water, isopropyl alcohol, N-methyl pyrrolidone, dimethylformamide or the like.

Any material may be used as the positive-electrode collector, as long as the positive-electrode collector 20 is a conductive substrate having a conductive surface, which is to be contact with the positive-electrode mixture layer 22.

Examples of the positive-electrode collector include a conductive substrate made of conductive materials such as metals, conductive metal oxides and conductive carbon; and non-conductive substrate, of which main body is coated with a conductive material(s) as mentioned above.

Preferred examples of the conductive material include copper, gold, aluminum, an alloy thereof, and a conductive carbon. The positive-electrode collector 20 may be an expanded metal, a punching metal, a foil, a net, or a foam, made of the material described above.

In the case of porous body, the shape and the number of through holes are not specifically limited, and can be appropriately chosen within a range not impeding the flow/mobility of lithium ions.

In the present invention, excellent cycle characteristics can be obtained when a coating amount of the positive-electrode mixture layer 22 is 4 mg/cm² or more and 20 mg/cm² or less. When the coating amount exceeds 20 mg/cm², cycle characteristics can deteriorate. Herein, the greater the coating amount, the higher the capacity.

More preferably, the coating amount of the positive-electrode mixture layer 22 is 10 mg/cm² or more and 20 mg/cm² or less. The "coating amount" means the amount for the positive-electrode mixture layer 22 to be provided on a single side of the positive-electrode collector 20.

In the case of forming a positive-electrode mixture layer 22 on both sides of the positive-electrode collector 20, each of the positive-electrode mixture layers 22 on one surface and another surface is formed to have the coating amount within the above range.

In the present invention, excellent cycle characteristics are achieved with the positive-electrode mixture layer 22 having a porosity of 35% or more and 65% or less. With the porosity of the positive-electrode mixture layer 22 of less than 35%, cycle characteristics deteriorate. Excellent cycle characteristics can be maintained even with the porosity of the positive-electrode mixture layer 22 of more than 65%.

However, the porosity of more than 65% is not desired, because the capacity and the power output are reduced with such porosity. It is more preferable that the porosity of the positive-electrode mixture layer 22 is 40% or more and 60% or less.

### Negative electrode

In the present invention, the material of negative electrode 12 can be made from known materials without any specific limitations, as long as the negative electrode is capable of reversibly intercalating and deintercalating lithium ions.

For example, a negative-electrode mixture layer 16 is formed by: dispersing a mixture containing a typical negative-electrode active material and a binder in a solvent, to prepare a negative-electrode slurry; applying the negative-electrode slurry to a negative-electrode collector 14; and drying the same.

The binder, the solvent, and the collector may be the same as in the above explanation for the positive electrode.

The negative-electrode active material may be, for example, a lithium-based metal material, an intermetallic compound material of metal and lithium metal, a lithium compound, a lithium intercalation carbon material, a carbon material, or a silicon-based material.

The lithium-based metal material is, for example, metal lithium or a lithium alloy (e.g. Li-Al alloy). The intermetallic compound material of metal and lithium metal is, for example, an intermetallic compound containing tin, silicon, and the like. The lithium compound is, for example, lithium nitride.

Examples of the lithium intercalation carbon material include carbon-based materials such as graphite and a hardly graphitizable carbon material, and a polyacene-based material. The polyacene-based material is, for example, an insoluble and infusible PAS having a polyacene-based skeleton.

All of the lithium intercalation carbon materials are substances that can be reversibly doped with lithium ions. The thickness of the negative-electrode mixture layer 16 is generally 10 µm to 200 µm, preferably 20 µm to 100 µm.

Examples of the carbon material include graphite and hard carbon.

Examples of the silicon-based material include silicon and a composite material from silicon and carbon.

In the present invention, a carbon material, a lithium-based metal material, or a silicon-based material is preferably used as the negative electrode.

In the present invention, the coating amount of the negative-electrode mixture layer 16 is appropriately chosen, with the coating amount of the positive-electrode mixture layer 22 taken into account.

In general, in a lithium-ion secondary battery, the coating amounts are decided so as to design the positive electrode and the negative electrode having substantially the same capacities (mAh) with each other, in view of the capacity balance and the energy densities of the positive electrode and the negative electrode.

Therefore, the coating amount of the negative-electrode mixture layer 16 is selected, depending on negative-electrode active material to be used, the capacity of positive electrode, and the like.

### Separator

As the separator for use in the present invention, known separators can be used without any specific limitation. Preferable examples of the separator include a porous material, which is durable to an electrolytic solution, a positive-electrode active material and a negative-electrode active material, and which has no electron conductivity having pores communicating with each other.

The porous body may be, for example, fabric cloth, non-woven fabric, a synthetic resin microporous membrane, and glass fiber. The synthetic resin microporous membrane is preferably used, and particularly, a polyolefin-based microporous membrane such as polyethylene or polypropylene is preferable, in the aspects of thickness, strength and resistance of the membrane.

### EXAMPLES

The present invention is further described in detail with reference to examples. The present invention, however, is not limited to the present examples. The following "parts" and "%" describing the amount of each material to be used are based on "mass" unless otherwise specified.

### Example 1

### (1) Preparation of positive electrode

Carbon-coated Li₃V₂(PO₄)₃ in an amount of 93 parts by mass as positive-electrode active material, ketjen black in an amount of 3 parts by mass as conductive material, and polyvinylidene fluoride (PVdF) in an amount of 4 parts by mass as binder were uniformly mixed.

50 g of the thus produced mixture was dispersed in 75 ml of N-methyl-2-pyrrolidone (NMP), to produce a positive-electrode mixture coating solution. The positive-electrode mixture coating solution was uniformly applied to an aluminum foil as a positive-electrode collector with a thickness of 15 µm on both sides thereof.

After drying, a positive-electrode active material layer having a coating amount of 15 mg/cm² was prepared on each side of the positive-electrode collector. The positive-electrode active material layer was cut into a shape with a width of 24 mm and a length of 38 mm to make a positive electrode. Then, a positive electrode lead was installed to the electrode.

Herein, Li₃V₂(PO₄)₃ used had been coated with carbon in an amount of 1.7 mass% in terms of C atoms-based conversion. The coating amount of carbon was measured with a total organic carbon (TOC) meter (TOC-5000A made by Shimadzu Corporation).

### (2) Preparation of negative electrode

Graphite in an amount of 96 parts by mass as negative-electrode active material and PVdF in an amount of 4 parts by mass as binder were uniformly mixed. 50 g of the thus produced mixture in an amount of was dispersed in 75 ml of NMP to produce a negative-electrode mixture coating solution.

The produced negative-electrode mixture coating solution was applied a copper foil for a negative-electrode collector with a thickness of 15 µm on both sides thereof. After drying, a negative-electrode active material layer having a coating amount of 7 mg/cm² is prepared on each side of the negative-electrode collector.

The layer was cut into a shape with a width of 26 mm and a length of 40 mm to make a negative electrode. Then, a negative electrode lead was installed to the electrode.

### (3) Preparation of electrolytic solution

Ethylene carbonate (EC) in an amount of 27.6 parts by mass, ethyl methyl carbonate (EMC) in an amount of 15.0 parts by mass, dimethyl carbonate (DMC) in an amount of 27.6 parts by mass, and lithium fluoroethyl phosphate (Li(C₂F₅)₃PF₃) in an amount of 29.8 parts by mass were mixed with one another.

### (4) Preparation of lithium ion secondary battery

The positive electrode and the negative electrode obtained in the steps (1) and (2) were laminated via a separator made of a microporous polyethylene membrane having a thickness of 12 µm, and loaded into an exterior member of aluminum laminate film so as to be heat-sealed.

A stacked battery was thus prepared. After injection of 1 g of the electrolytic solution obtained in the step (3) to the stack battery, vacuum thermal bonding was performed to seal the battery. A lithium ion secondary battery (Sample 1) with a mini cell size was obtained in Example 1.

### Examples 2 and 3

Lithium ion secondary batteries (Samples 2 and 3) with a mini cell size were manufactured in Examples 2 and 3 by repeating the same procedures as in Example 1, except that the amounts of the solvent and solute, which are used for the preparation of the electrolytic solution, were changed as described in the following Table 1.

### Comparative Examples 1 and 2

Lithium ion secondary batteries (Comparative Samples 1 and 2) with a mini cell size were manufactured in Comparative Examples 1 and 2 by repeating the same procedures as in Example 1, except that the amounts of the solvent and solute, which are used for the preparation of the electrolytic solution, were changed as described in the following Table 1.

**Table 1**

| | EC | EMC | DEM | FEC | VC | Li(C₂F₅)PF₃ | LiPF₆ |
|---|---|---|---|---|---|---|---|
| Example 1 (Sample 1) | 27.6 | 15.0 | 27.6 | - | - | 29.8 | - |
| Example 2 (Sample 2) | 27.6 | 14.6 | 26.0 | 2.0 | - | 29.8 | - |
| Example 3 (Sample 3) | 27.6 | 14.6 | 26.0 | - | 2.0 | 29.8 | - |
| Comparative Example 1 (Comparative Sample 1) | 28.2 | 28.0 | 29.4 | - | 2.0 | - | 12.4 |
| Comparative Example 2 (Comparative Sample 2) | 28.2 | 28.0 | 29.4 | 2.0 | | - | 12.4 |

The numerical values in Table 1 are based on parts by mass.

### Performance evaluation: cycle test

Samples 1 to 3 and Comparative Samples 1 and 2 were charged at room temperature (20 °C) at a constant current of 0.7 C until a final voltage of 4.6 V, subsequently charged at a constant voltage of 4.6 V, and then discharged at a constant current of 0.7 C until a final voltage of 2.5 V was reached. The charge and the discharge were repeated for 500 cycles under the above-mentioned conditions.

### (1) Quantitative determination of vanadium: amount of vanadium eluting into electrolytic solution

Four pieces for each of Samples 1 to 3 (Examples 1 to 3) and Comparative Sample 1 (Comparative Example 1) were subjected to the cycle test described above. After 100, 200, 300, and 500 cycles, the batteries were disassembled. One of negative electrodes was taken out of each battery, and washed with diethyl carbonate and then subjected to vacuum drying.

The negative electrode material was scraped with a spatula, and put into 50 % sulfuric acid aqueous solution. The solution was heated at 80 °C and stirred. After the solution had been filtered, the amount of vanadium (ppm) in the negative electrode was measured with an inductively coupled plasma (ICP) mass analyzer (manufactured by Seiko Instruments Inc.). The results are shown in FIG. 2.

The results show that the amount of vanadium precipitating on the negative electrode was restricted to an extremely low level even after repeating cycles, in Samples 1 to 3 wherein Li(C₂F₅)₃PF₃ was used an electrolyte.

By contrast, it is shown that the amount of vanadium precipitating on the negative electrode was rapidly increased as the cycle number increases, in Comparative Sample 1 wherein LiPF₆ is used as an electrolyte.

### (2) Capacity retention rate

After each of Samples 1 to 3 (Examples 1 to 3) and Comparative Samples 1 and 2 (Comparative Examples 1 and 2) was subjected to the cycle test, the capacity retention rate after 500 cycles was measured. Each of the discharge capacity retention rate (%), based on the 100 % initial discharge capacity is as follows:

**Table 2**

| | Discharge capacity retention rate after 500 cycles (%) |
|---|---|
| Sample 1 | 72.2 |
| Sample 2 | 78.9 |
| Sample 3 | 69.1 |
| Comparative Sample 1 | 35.0 |
| Comparative Sample 2 | 59.3 |

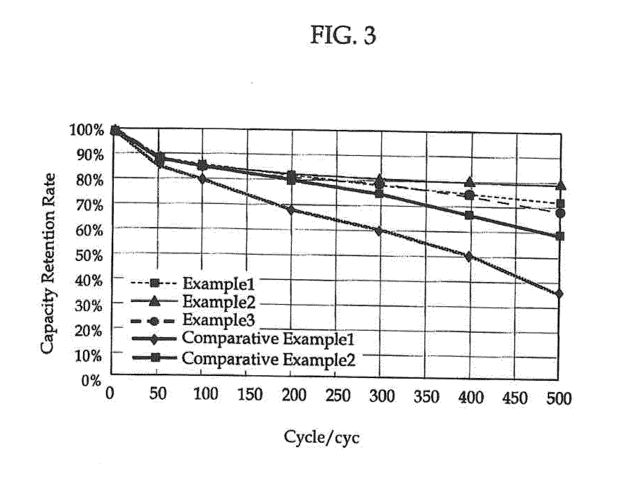

Further, the transition of discharge capacity retention rate of each sample until 500 cycles is shown in graph in FIG. 3.

The results show that the discharge capacity retention was maintained without being decreased even after the cycle text, in Samples 1 to 3 wherein Li(C₂F₅)₃PF₃ was used as an electrolyte. In contrast, it is shown, in Comparative Samples 1 and 2 where LiPF₆ was used as an electrolyte, that the discharge capacity retention rate was significantly decreased as the cycle number increased.

Moreover, FIG. 3 shows that the discharge capacity retention rate is particularly well maintained by use of fluoroethylene carbonate (FEC) as solvent for the electrolyte (Sample 2 (Example 2)).

### (3) Surface analysis of positive electrode

Samples 1 and 2 (Examples 1 and 2) and Comparative Sample 1 (Comparative Example 1) were subjected to the cycle test. After 500 cycles, each Sample was disassembled in an argon box. One of negative electrodes was taken out of each sample, and washed with diethyl carbonate and then subjected to vacuum drying.

Using a transfer vessel, each sample was introduced into a scanning Auger electron spectrometer (670Xi type, manufactured by PHI) without exposure to atmospheric air. Then, the positive electrode coating film was subjected to qualitative analysis on the surface and in the depth direction.

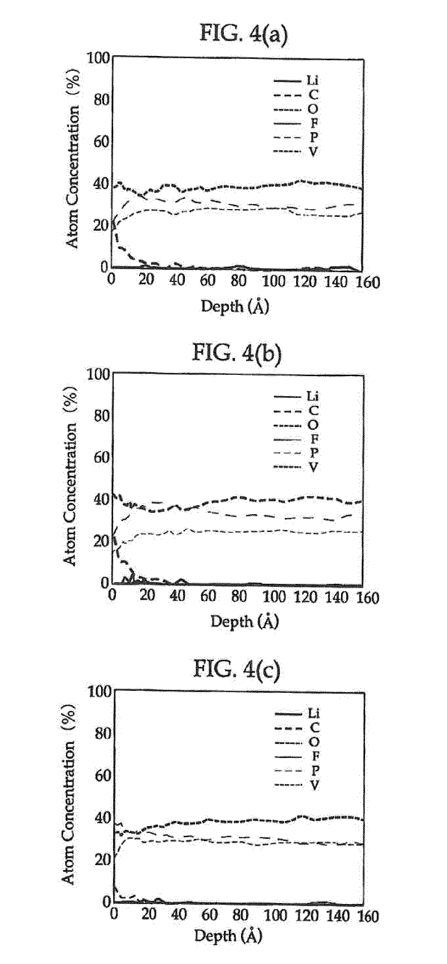

The results are shown in FIGS. 4(a) to 4(c). FIG. 4(a), FIG. 4(b) and FIG. 4(c) show the analysis results of Sample 1, Sample 2 and Comparative Sample 1, respectively. In these figures, the horizontal axis represents depth (Å) of the positive electrode coating film and the vertical axis represents atom concentration (%).

Samples 1 and 2 in the present invention have higher concentration for carbon (C) and oxygen (O), compared to those in Comparative Example 1. In Samples 1 and 2, the presence of phosphorus (P) was also confirmed. Accordingly, it is assumed that a mixture coating film including carbon, oxygen, and phosphorus was formed on the positive electrode, in the present invention.

Lithium fluoroethyl phosphate itself is known as a stable compound which is hardly decomposed. It is presumed, however, that the phosphate was oxidatively decomposed together with a solvent in a high-voltage state, and that the above-mentioned mixture coating film was formed as the positive electrode coating.

The present invention is not limited to the above embodiments, and can be modified in various ways within the scope of the invention.

### Description of Symbols

- 10: Lithium ion secondary battery
- 12: Negative electrode
- 14: Negative-electrode collector
- 14a: Lead
- 16: Negative-electrode mixture layer
- 18: Positive electrode
- 20: Positive-electrode collector
- 20a: Lead
- 22: Positive-electrode mixture layer
- 25: Separator

## Claims

1. A lithium ion secondary battery comprising:
- a negative electrode for reversibly intercalating and deintercalating lithium ions,
- a positive electrode comprising lithium vanadium phosphate, and
- a non-aqueous electrolytic solution comprising lithium fluoroethyl phosphate as an electrolyte.

2. The lithium ion secondary battery according to claim 1,
wherein the operating voltage of the battery is 4.3 V or more.

3. The lithium ion secondary battery according to claim 1 or 2,
wherein lithium fluoroethyl phosphate is Li(C₂F₅)₃PF₃.

4. The lithium ion secondary battery according to any one of claims 1 to 3,
wherein the non-aqueous electrolytic solution comprises at least one solvent selected from the group consisting of dimethyl carbonate (DMC), diethyl carbonate (DEC), ethyl methyl carbonate (EMC), ethylene carbonate (EC), fluoroethylene carbonate (FEC), propylene carbonate (PC), butylene carbonate (BC), vinylene carbonate (VC), acetonitrile (AN), 1,2-dimethoxyethane (DME), tetrahydrofuran (THF), 1,3-dioxolane (DOXL), dimethyl sulfoxide (DMSO), sulfolane (SL), and propionitrile (PN).

5. The lithium ion secondary battery according to claim 4,
wherein the non-aqueous electrolytic solution comprises fluoroethylene carbonate in an amount of 0.1 mass% to 30 mass%, based on the total amount of solvent.

6. The lithium ion secondary battery according to any one of claims 1 to 5, wherein the lithium vanadium phosphate is represented by:
LiₓV_{2-y}M_{y}(PO₄)_{z};
wherein M is one or more metal elements selected from the group consisting of Fe, Co, Mn, Cu, Zn, Al, Sn, B, Ga, Cr, V, Ti, Mg, Ca, Sr and Zr; and
1 ≤ x ≤ 3;
0 ≤ y < 2; and
2 ≤ z ≤ 3.

7. The lithium ion secondary battery according to claim 6,
wherein the lithium vanadium phosphate is Li₃V₂(PO₄)₃.

8. The lithium ion secondary battery according to any one of claims 1 to 7, wherein the content of lithium fluoroethyl phosphate is in the range of 0.1 mass% to 35 mass%, based on 100 mass% of the total mass of electrolytic solution.
